**Europäisches Patentamt**

**European Patent Office**

**Office européen des brevets**

(11) Numéro de publication: **0 201 388**
**A1**

## (12) DEMANDE DE BREVET EUROPEEN

(21) Numéro de dépôt: **86400821.4**

(22) Date de dépôt: **16.04.86**

(51) Int. Cl.⁴: **H 02 P 5/16**, H 02 P 5/165

(30) Priorité: **16.04.85 FR 8505691**

(43) Date de publication de la demande: **12.11.86**
**Bulletin 86/46**

(84) Etats contractants désignés: **AT BE CH DE FR GB IT LI LU NL SE**

(71) Demandeur: **Champavier, Louis, Les Gipières,
F-06370 Mouans-Sartoux (FR)**

(72) Inventeur: **Champavier, Louis, Les Gipières,
F-06370 Mouans-Sartoux (FR)**

(74) Mandataire: **Nony, Michel et al, Cabinet NONY &
CIE 29, rue Cambacérès, F-75008 Paris (FR)**

(54) **Dispositif de régulation d'un moteur électrique à courant continu et applications à un mesureur d'effort et à un dispositif d'exercice physique.**

㉗ L'invention est relative à un dispositif de régulation d'un moteur électrique (1) à courant continu, comprenant:

— une boucle de régulation externe, dite «boucle vitesse» par laquelle la vitesse de rotation (N) du moteur est ramenée à l'entrée du dispositif, notamment sous la forme de la tension aux bornes d'une génératrice tachymétrique (2) accouplée audit moteur, et comparée à un signal de référence, le signal d'erreur ($e_1$) ainsi généré étant amplifié dans un «amplificateur vitesse» (8) pour fournir une «référence intensité»,

— une boucle de régulation interne, dite «boucle intensité», par laquelle l'intensité (I) dans le moteur est ramenée à la sortie de l'amplificateur vitesse, et comparée à la référence intensité, le signal d'erreur ($e_2$) ainsi obtenu étant amplifié dans un «amplificateur intensité» (13) pour fournir le signal d'entrée ($U_{all}$) dans un circuit de commande (4), et

— un circuit écrêteur (9) disposé entre la sortie de l'amplificateur vitesse et l'entrée dans la boucle intensité.

Le circuit écrêteur comprend des moyens pour élaborer un signal correspondant au courant requis pour compenser les pertes du moteur, des moyens pour élaborer un signal correspondant au courant utile pour obtenir le fonctionnement demandé, et un circuit sommateur pour faire la somme desdits signaux.

0201388

La présente invention concerne un dispositif de régulation d'un moteur électrique à courant continu, et plus particulièrement un tel dispositif du type comprenant :

- une boucle de régulation externe dite "boucle vitesse", par laquelle la vitesse de rotation du moteur est ramenée à l'entrée du dispositif, notamment sous la forme de la tension aux bornes d'une génératrice tachymétrique accouplée audit moteur, et comparée à un signal de référence, le signal d'erreur ainsi généré étant amplifié dans un "amplificateur vitesse" pour fournir une "référence intensité", et

- une boucle de régulation interne, dite "boucle intensité", par laquelle l'intensité dans le moteur est ramenée à la sortie de l'amplificateur vitesse, et comparée à la référence intensité, le signal d'erreur ainsi obtenu étant amplifié dans un "amplificateur intensité" pour fournir le signal d'entrée dans un circuit de commande.

On connaît déjà de tels dispositifs dans lesquels, en particulier, un circuit écrêteur est disposé entre la sortie de l'amplificateur vitesse et l'entrée dans la boucle intensité.

Cet écrêteur est généralement réalisé au moyen de deux potentiomètres qui réglent, selon le sens de fonctionnement, la limitation de l'intensité dans le circuit d'alimentation du moteur.

Cet agencement présente toutefois l'inconvénient de globaliser tous les paramètres de fonctionnement du moteur. En effet, seule une partie du courant dans le moteur est utilisée pour entraîner la charge utile dans les conditions voulues. L'autre partie du courant n'a pour but que de compenser les pertes.

Il en résulte que, dans les moteurs présentant des pertes importantes, on est amené à prévoir un circuit écrêteur permettant le passage d'un courant relativement élevé. Pour éviter alors l'apparition de courants trop forts dans le moteur, on place une constante de temps sur la boucle intensité, ce qui revient à diminuer la rapidité de réponse de la régulation, et par conséquent les performances du moteur.

La présente invention a tout d'abord pour but de fournir un dispositif de régulation qui élimine cet inconvénient et augmente par conséquent la rapidité de la réponse du moteur.

A cet effet, l'invention a pour objet un dispositif de régulation d'un moteur électrique à courant continu comprenant :

- une boucle de régulation externe dite "boucle vitesse", par laquelle la vitesse de rotation du moteur est ramenée à l'entrée du

TG/JD/DCP - CDE 31383

dispositif, notamment sous la forme de la tension aux bornes d'une génératrice tachymétrique accouplée audit moteur, et comparée à un signal de référence, le signal d'erreur ainsi généré étant amplifié dans un "amplificateur vitesse" pour fournir une "référence intensité",

- une boucle de régulation interne dite "boucle intensité", par laquelle l'intensité dans le moteur est ramenée à la sortie de l'amplificateur vitesse et comparée à la référence intensité, le signal d'erreur ainsi obtenu étant amplifié dans un "amplificateur intensité" pour former le signal d'entrée dans un circuit de commande, et

- un circuit écrêteur disposé entre la sortie de l'amplificateur vitesse et l'entrée dans la boucle intensité,

caractérisé par le fait que le circuit écrêteur comprend des moyens pour élaborer un signal correspondant au courant requis pour compenser les pertes du moteur, des moyens pour élaborer un signal correspondant au courant utile pour obtenir le fonctionnement demandé, et un circuit sommateur pour faire la somme desdits signaux.

On conçoit par conséquent que le dispositif selon l'invention permet de traiter séparément le courant utile et le courant de pertes.

De préférence, les moyens pour élaborer le signal correspondant aux courants de pertes comprennent des moyens pour élaborer séparément un signal correspondant au couple de décollage et un signal correspondant aux pertes fonction de la vitesse.

On sait en effet que les frottements induisent deux types de pertes différentes. Les pertes statiques correspondent à l'effort qui doit être fourni pour mettre le moteur en mouvement à partir de l'arrêt, c'est-à-dire au couple de décollage. Les pertes dynamiques correspondent au frottement fonction de la vitesse, et généralement proportionnel à cette dernière.

Le circuit écrêteur comporte également de préférence des moyens pour élaborer un signal correspondant au courant requis par le moteur pour vaincre les forces d'inertie et atteindre la vitesse de rotation demandée, et pour ajouter ce signal auxdits signaux correspondant aux courants de pertes et au courant utile.

Ce dernier signal correspond par conséquent au courant nécessaire pour accélérer le moteur jusqu'à la vitesse demandée. Il est nul en cas de fonctionnement à vitesse constante.

Dans un mode de réalisation particulier, les entrées du circuit sommateur sont constituées par les points milieux de potentiomètres connectés entre la masse et, respectivement, une tension fixe, une tension

TG/JD/DCP – CDE 31383

représentative de la vitesse de rotation du moteur une tension représentative de l'accélération du moteur, et une tension représentative du fonctionnement demandé.

La tension fixe correspond au frottement statique, la tension représentative de la vitesse de rotation correspond au frottement dynamique, et la tension représentative de l'accélération correspond aux forces d'inertie. On verra ci-après que le réglage de la régulation s'effectue très simplement à l'aide de ces potentiomètres.

Les moyens pour élaborer le signal correspondant au courant utile pour obtenir le fonctionnement demandé peuvent comprendre des moyens choisis parmi le groupe :

- des moyens pour élaborer un signal correspondant à la différence entre la vitesse de rotation du moteur et une vitesse de référence,
- des moyens pour fournir un signal correspondant à un couple de référence, et
- des moyens pour fournir un signal représentant une fonction donnée du temps.

L'élaboration du signal correspondant à la différence entre la vitesse de rotation du moteur et une vitesse de référence correspond à un fonctionnement du moteur à vitesse constante.

Si, au contraire, on fournit un signal correspondant à un couple de référence, le moteur fonctionne alors à couple constant.

Enfin, en fournissant un signal représentant une fonction donnée du temps, on peut amener le moteur à suivre un cycle de fonctionnement désiré.

En particulier, les moyens pour élaborer le signal correspondant au courant utile peuvent comprendre au moins deux moyens dudit groupe et des moyens pour effectuer la somme des signaux correspondants.

Il est alors possible, par exemple, d'ajouter des oscillations ou des vibrations autour d'un point de fonctionnement à vitesse constante ou à couple constant.

Des moyens de visualisation peuvent en outre être connectés auxdits moyens pour élaborer le signal correspondant au courant utile.

Cette visualisation est en effet particulièrement intéressante puisque, contrairement à ce qui se passe dans la technique antérieure, ce courant utile correspond effectivement, et uniquement, à ce qui est demandé au moteur, indépendamment de toutes les pertes.

Un autre inconvénient des dispositifs de régulation du type mentionné ci-dessus réside dans la non linéarité du couple en fonction du signal d'entrée dans le circuit de commande, pour différents niveaux de vitesse.

TG/JD/DCP - CDE 31383

Plus particulièrement, dans le cas d'un moteur alimenté à partir de ponts à thyristors commandés par un allumeur qui détermine leur angle d'allumage, le couple moteur est fonction à la fois de cet angle d'allumage et de la vitesse de rotation.

On peut en effet montrer que l'angle d'allumage $a$ peut s'écrire sous la forme :

$$a = f(E) + g(I)$$

où E est la force centre-électromotrice développée par le moteur, et I le courant dans le moteur. La non linéarité peut alors être mise en évidence en écrivant les équations classiques du moteur à courant continu :

$$E = k_1 \, N \, \theta$$
$$C = k_2 \, \theta \, I$$

où $k_1$ et $k_2$ sont des constantes, N est la vitesse de rotation du moteur, $\theta$ est le champ, et C est le couple sur l'arbre moteur.

En reportant dans l'équation 1, les valeurs ainsi obtenues E et I, on en déduit :

$$a = f'(N) + g'(C)$$

qui montre que le couple dépend à la fois de l'angle d'allumage, c'est-à-dire du signal de commande, et de la vitesse de rotation.

Un autre but de l'invention est de rendre le couple moteur indépendant de la vitesse de rotation pour une valeur donnée du signal de commande.

A cet effet, l'invention a également pour objet un dispositif de régulation d'un moteur électrique à courant continu comprenant :

- une boucle de régulation externe dite "boucle vitesse" par laquelle la vitesse de rotation du moteur est ramenée à l'entrée du dispositif, notamment sous la forme de la tension aux bornes d'une génératrice tachymétrique accouplée audit moteur, et comparée à un signal de référence, le signal d'erreur ainsi généré étant amplifié dans un "amplificateur vitesse" pour fournir une "référence intensité", et

- une boucle de régulation interne dite "boucle intensité" par laquelle l'intensité dans le moteur est ramenée à la sortie de l'amplificateur vitesse et comparée à la référence intensité, le signal d'erreur ainsi obtenu étant amplifié dans un "amplificateur intensité" pour fournir le signal d'entrée dans un circuit de commande,

caractérisé par le fait qu'il comprend des moyens pour additionner au signal d'erreur de la boucle intensité un signal dont la valeur absolue est fonction

TG/JD/DCP - CDE 31383

0201388

de la vitesse de rotation du moteur et dont le signe dépend du fait que le moteur fonctionne en moteur proprement dit ou en générateur.

La valeur absolue du signal peut en particulier être proportionnelle à la vitesse.

Il en résulte par conséquent une polarisation de la régulation en fonction de la vitesse de rotation du moteur, ce qui présente notamment pour avantage de pouvoir passer directement d'un quadrant de fonctionnement à un autre sans les "zones mortes" habituelles dans les régulateurs sans courant de circulation.

Dans le cas où le dispositif de régulation selon l'invention est utilisé pour la régulation d'un moteur alimenté par deux ponts redresseurs, et comprend par conséquent une logique de commande pour sélectionner un des ponts selon que le moteur fonctionne en moteur proprement dit ou en générateur, le signe dudit signal fonction de la vitesse de rotation peut être déterminé par cette logique de commande.

Plus particulièrement, le dispositif peut comprendre un commutateur commandé par cette logique, ledit commutateur étant agencé pour appliquer la valeur absolue du signal fonction de la vitesse, soit à l'entrée positive, soit à l'entrée négative, de l'amplificateur intensité.

L'invention a également pour objet un mesureur d'effort et un appareil d'exercice physique, caractérisés par le fait qu'ils comprennent un moteur électrique à courant continu et un dispositif de régulation tel que décrit ci-dessus.

On a déjà vu qu'il était possible de visualiser avec précision le courant effectif correspondant au couple utile sur l'arbre moteur. Le moteur et le dispositif de régulation selon l'invention permettent donc de mesurer efficacement en temps réel l'effort exercé sur l'arbre.

Il est particulièrement intéressant d'utiliser cette caractéristique dans les appareils d'exercices physiques qui peuvent ainsi fonctionner soit à vitesse constante, soit à effort constant, avec éventuellement l'addition de stimuli tels que des oscillations à l'un de ces deux modes de fonctionnement.

On décrira maintenant à titre d'exemple non limitatif un mode de réalisation particulier de l'invention en référence aux dessins annexés dans lesquels :

- la figure 1 est un schéma d'ensemble d'un dispositif de régulation selon l'invention,

- la figure 2 représente plus en détail l'écrêteur de la figure 1,

- la figure 3 représente également plus en détail l'unité de linéarisation de la figure 1 et,

TG/JD/DCP - CDE 31383

- les figures 4A et 4B représentent les courbes caractéristiques d'un moteur à courant continu, associé respectivement à une régulation classique et à une régulation selon l'invention.

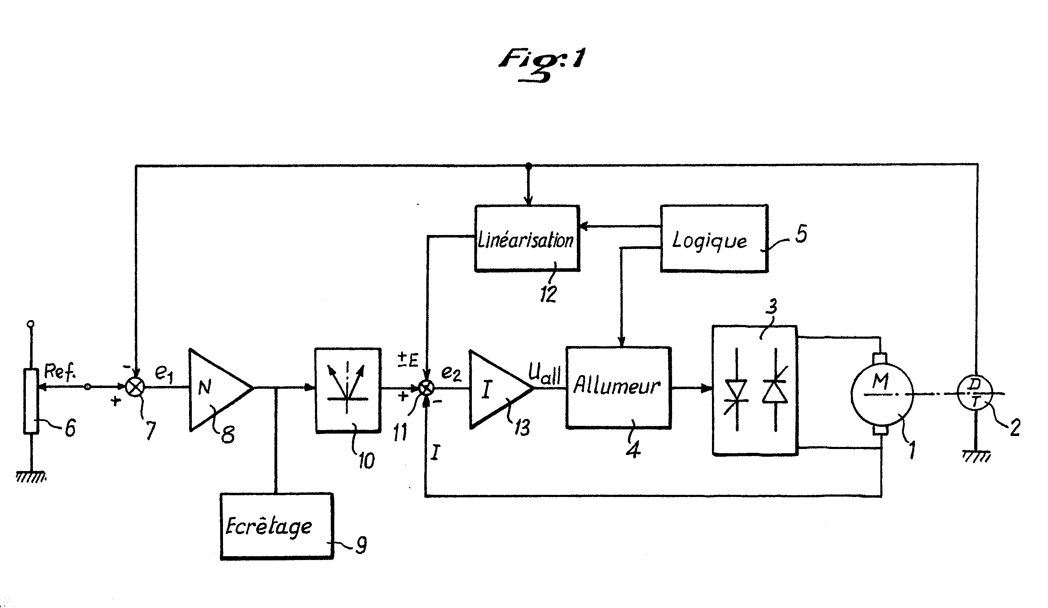

La figure 1 représente un moteur à courant continu 1 alimenté par un réseau monophasé auquel est accouplé mécaniquement une dynamo tachymétrique 2.

Le moteur 1 est alimenté par l'un de deux ponts à thyristors 3, suivant qu'il fonctionne en moteur proprement dit ou en générateur. Dans le premier cas, le moteur oppose une force contre-électromotrice à la tension d'alimentation et, dans le deuxième cas, il renvoit au contraire du courant sur le réseau.

Les ponts à thyristors 3 sont commandés par un circuit allumeur 4 qui détermine l'angle d'allumage des thyristors, à partir d'une tension de référence $U_{all}$ et des indications fournies par une logique de commande 5 qui prend notamment en compte des informations de sécurité, le signe de la référence intensité décrite ci-après, et la présence ou non de courant. La logique 5 détermine en particulier lequel des deux ponts à thyristors 3 est utilisé en fonction du quadrant (moteur ou redresseur) de fonctionnement du moteur.

On exposera maintenant la façon dont la tension de référence $U_{all}$ est obtenue.

Un potentiomètre 6 fournit une tension de référence à l'entrée positive d'un sommateur 7 qui reçoit sur son entrée négative le retour vitesse constitué par la tension aux bornes de la dynamo tachymétrique 2, proportionnelle à la vitesse de rotation N du moteur.

La différence ainsi obtenue, ou erreur de vitesse $e_1$, est amplifiée dans un amplificateur 8 et écrêtée dans un circuit d'écrêtage 9 selon l'invention qui sera décrit en détail ci-après :

Un circuit 10 permet de former la valeur absolue du signal ainsi obtenu, valeur absolue qui constitue la référence intensité pour la boucle de régulation intérieure ou boucle intensité.

Cette référence intensité est appliquée à l'entrée positive d'un sommateur 11 qui reçoit par ailleurs sur son entrée négative le retour intensité proportionnel au courant I traversant le moteur 1.

Selon l'invention, on applique également à une entrée du sommateur 11 un signal de linéarisation proportionnel à la vitesse de rotation du moteur, c'est-à-dire, comme on l'a vu ci-dessus, proportionnel à la force contre électromotrice développée par le moteur. Ce signal est élaboré par un circuit de linéarisation 12 selon l'invention à partir, d'une part, de la tension aux bornes de la dynamo tachymétrique 2 et, d'autre part, de l'état de

TG/JD/DCP - CDE 31383

la logique de commande 5, fonction du quadrant dans lequel travaille le moteur.

Le signal $e_2$ égal à la référence intensité moins le retour intensité plus ou moins le signal de linéarisation, est amplifié dans l'amplificateur 13 dont la sortie $U_{all}$ constitue le signal de commande de l'allumeur.

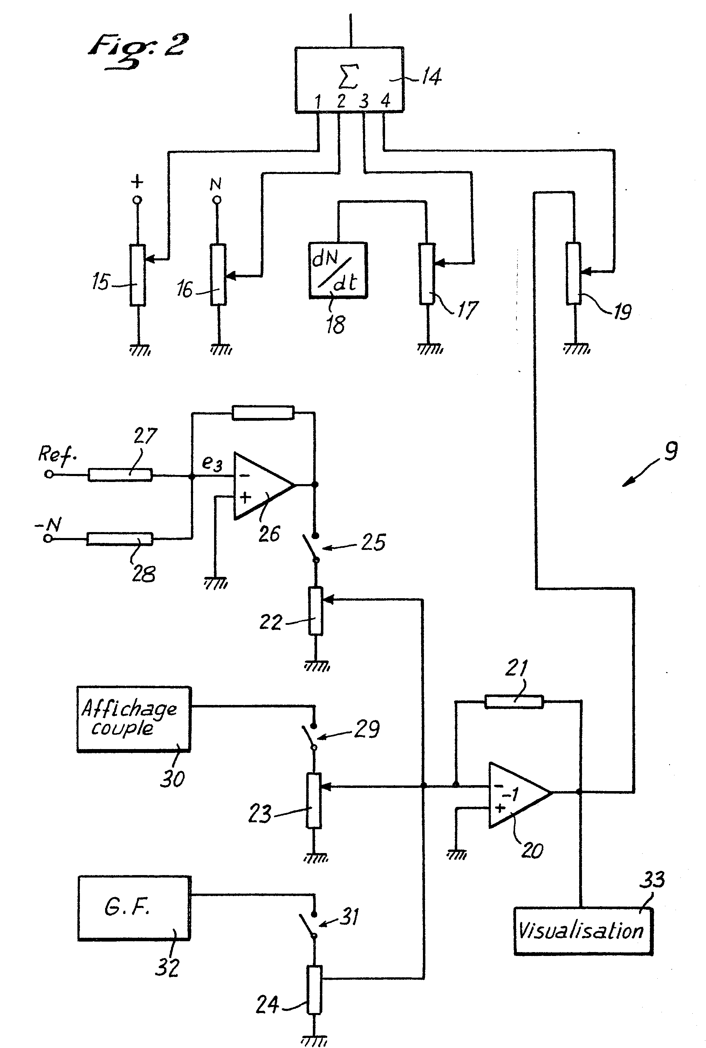

Le circuit écréteur 9 représenté en détail à la figure 2 est constitué d'un sommateur 14 à quatre entrées dont la sortie est connectée à la sortie de l'amplificateur 8.

La première entrée du sommateur 14 est reliée au point milieu d'un potentiomètre 15 connecté entre la masse et une tension fixe.

La deuxième entrée du sommateur 14 est reliée au point milieu d'un potentiomètre 16 connecté entre la masse et une tension proportionnelle à la vitesse de rotation N du moteur. Cette tension peut être prélevée aux bornes de la dynamo tachymétrique 2.

La troisième entrée du sommateur 14 est reliée au point milieu d'un potentiomètre 17 connecté entre la masse et une tension proportionnelle à l'accélération du moteur. Cette tension peut être obtenue à l'aide d'un circuit 18 dérivant la tension aux bornes de la dynamo tachymétrique 2.

La quatrième entrée du sommateur 14 est reliée au point milieu d'un potentiomètre 19 connecté entre la masse et la sortie d'un amplificateur 20 monté en sommateur.

Une résistance 21, montée de façon connue entre la sortie de l'amplificateur 20 et son entrée négative, assure à ce dernier un gain unité. L'entrée négative de l'amplificateur 20 est également reliée aux points milieux de trois potentiomètres de réglage 22, 23 et 24 dont une des extrémités est reliée à la masse.

L'autre extrémité du potentiomètre 22 est reliée, par l'intermédiaire d'un commutateur 25, à la sortie d'un amplificateur 26 montée également en sommateur, qui reçoit sur son entrée négative, d'une part une tension de référence par l'intermédiaire d'une résistance 27, et d'autre part une tension proportionnelle à l'opposé à la vitesse de rotation N du moteur par l'intermédiaire d'une résistance 28.

La sortie de l'amplificateur 26 mesure donc l'écart $e_3$ amplifié entre la vitesse de rotation actuelle du moteur et une valeur de consigne.

L'autre extrémité du potentiomètre 23 est reliée, par l'intermédiaire d'un commutateur 29, à une unité d'affichage 30 permettant de fixer une valeur de consigne pour le couple utile fourni par le moteur.

Enfin, l'autre extrémité du potentiomètre 24 est reliée, par l'intermédiaire d'un commutateur 31, à un générateur de fonction 32.

La sortie de l'amplificateur 20 est également reliée à une unité de visualisation 32.

Le réglage des potentiomètres 15, 16 et 17 s'effectue de la façon suivante.

Le moteur étant à l'arrêt, le potentiomètre 15 est amené à sa position qui provoque tout juste le démarrage. L'entrée 1 du sommateur 14 permet donc de fournir au moteur le courant correspondant à son couple de décollage.

Le potentiomètre 16 est ensuite amené à sa position donnant au moteur sa vitesse de rotation maximale. L'entrée 2 du sommateur 14 fournit donc au moteur le courant correspondant aux pertes fonction de la vitesse.

Le potentiomètre 17 est ensuite placé dans la position pour laquelle le moteur accélère d'une vitesse nulle à sa vitesse maximale en un temps choisi. L'entrée 3 du sommateur 14 fournit donc au moteur le courant correspondant à sa montée en vitesse.

Le potentiomètre 19 est ensuite réglé de sorte que le courant utile dans le moteur corresponde à la fraction choisie du courant total, et les potentiomètres 22, 23 et 24 sont réglés de manière à équilibrer les différentes entrées de l'amplificateur 20.

On constate par conséquent que, lorsque l'interrupteur 25 est fermé, l'amplificateur 20 fournira au moteur exactement le courant nécessaire pour tourner à la vitesse correspondant à la vitesse de consigne affichée sur la résistance 27. Le moteur tournera à cette vitesse quelle que soit la charge qui lui est appliquée. Dans le cas d'une application à un appareil d'exercices physiques, ceci correspondra à un fonctionnement isocinétique.

Dans le cas où le commutateur 29 est fermé, le moteur fournira exactement le couple affiché en 30, quelle que soit sa vitesse de rotation. Dans le cas d'une application à un mesureur d'efforts, on visualisera le couple exercé sur l'arbre moteur. Dans le cas d'une application à un appareil d'exercices physiques, ceci correspondra à un fonctionnement isotonique.

Enfin, en fermant le commutateur 31, on pourra faire suivre au moteur n'importe quelle loi de fonctionnement désirée. Dans le cas d'une application à un appareil d'exercices physiques, on pourra en particulier exercer un effort oscillant tout en maintenant fixe la position de l'organe de manoeuvre, ce qui correspondra à un fonctionnement isométrique.

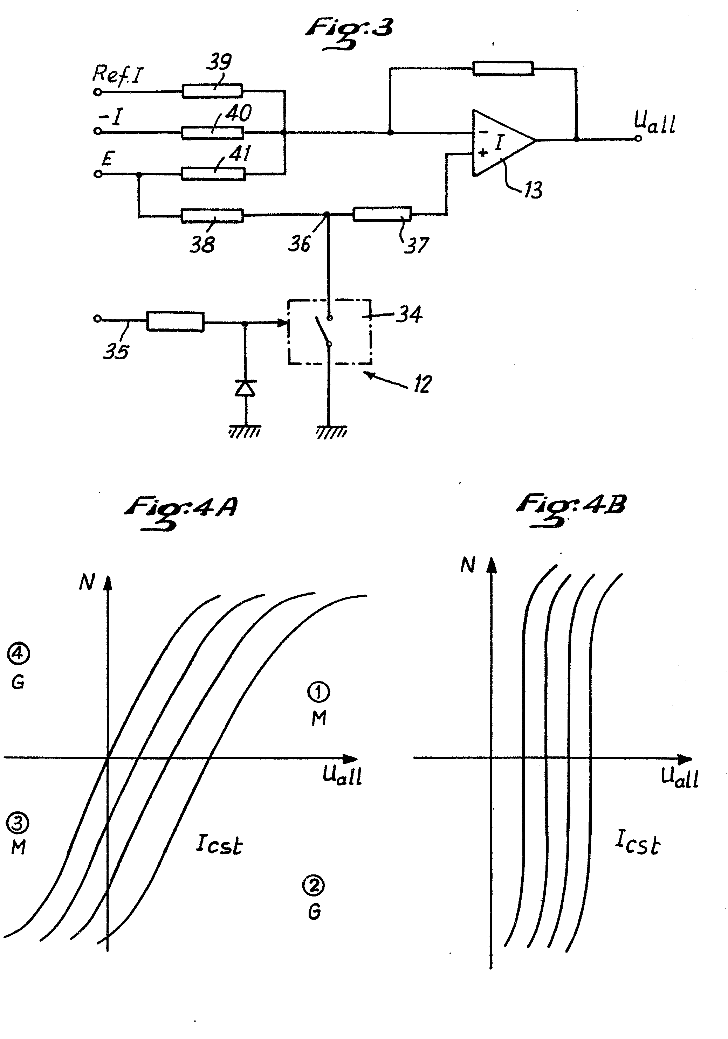

Le circuit de linéarisation 12 représenté à la figure 3 est composé essentiellement d'un commutateur 34 commandé à partir d'une entrée 35 provenant de la logique de commande 5.

Le commutateur 34 est connecté entre la masse et le point commun 36 de deux résistances 37 et 38. L'autre borne de la résistance 37 est connectée

TG/JD/DCP - CDE 31383

0201388

à l'entrée positive de l'amplificateur 13 et l'autre borne de la résistance 38 reçoit le retour vitesse, c'est-à-dire la tension aux bornes de la dynamo tachymétrique 2.

L'entrée négative de l'amplificateur 13 reçoit d'une part la référence intensité par l'intermédiaire d'une résistance 39, d'autre part, le retour intensité par l'intermédiaire d'une résistance 40, et enfin le retour vitesse par l'intermédiaire d'une résistance 41.

On constate par conséquent que, lorsque le commutateur 34 est fermé, l'amplificateur 13 reçoit le retour vitesse E sur son entrée négative. E est par conséquent ajouté à l'écart d'intensité. Par contre, les résistances 37, 38 et 41 sont choisies de telle sorte que, si le commutateur 34 est ouvert, le retour vitesse E soit appliqué à l'entrée positive de l'amplificateur 13, auquel cas E est retranché de l'écart intensité.

Les figures 4A, 4B représentent les courbes caractéristiques du moteur dans le plan tension d'allumage/vitesse pour un courant constant dans le moteur. Celui-ci fonctionne en moteur proprement dit dans les quadrants 1 et 3 et en générateur dans les quadrants 2 et 4.

Le couple étant proportionnel au courant, on voit sur la figure 4A que, dans le cas d'une régulation classique, ce couple dépend à la fois de la tension à l'entrée de l'allumeur et de la vitesse. On voit au contraire, sur la figure 4B que la linéarisation selon l'invention a redressé les courbes de courant (et donc de couple) constant, de sorte qu'à une tension donnée à l'entrée de l'allumeur correspond un seul couple, quelle que soit la vitesse de rotation du moteur.

Diverses variantes et modifications peuvent bien entendu être apportées à la description qui précéde, sans sortir pour autant du cadre ni de l'esprit de l'invention.

C'est ainsi en particulier que l'on peut détecter aux bornes de la dynamo tachymétrique le sens de rotation du moteur, et, en fonction de ce sens, fournir au circuit d'écrétage des valeurs différentes pour les portes aux décollage et pour l'effort affiché.

TG/רי/DCP - CDE 31383

020 88

## REVENDICATIONS

1 - Dispositif de régulation d'un moteur électrique (1) à courant continu, comprenant :

- une boucle de régulation externe, dite "boucle vitesse", par laquelle la vitesse de rotation (N) du moteur est ramenée à l'entrée du dispositif, notamment sous la forme de la tension aux bornes d'une génératrice tachymétrique (2) accouplée audit moteur, et comparée à un signal de référence, le signal d'erreur ($e_1$) ainsi généré étant amplifié dans un "amplificateur vitesse" (8) pour fournir une "référence intensité",

- une boucle de régulation interne, dite "boucle intensité", par laquelle l'intensité (I) dans le moteur est ramenée à la sortie de l'amplificateur vitesse, et comparée à la référence intensité, le signal d'erreur ($e_2$) ainsi obtenu étant amplifié dans un "amplificateur intensité" (13) pour fournir le signal d'entrée ($U_{all}$) dans un circuit de commande (4), et

- un circuit écrêteur (9) disposé entre la sortie de l'amplificateur vitesse et l'entrée dans la boucle intensité,

caractérisé par le fait que le circuit écrêteur comprend des moyens (15, 16) pour élaborer un signal correspondant au courant requis pour compenser les pertes du moteur, des moyens (19, 20...) pour élaborer un signal correspondant au courant utile pour obtenir le fonctionnement demandé, et un circuit sommateur (14) pour faire la somme desdits signaux.

2 - Dispositif de régulation selon la revendication 1, caractérisé par le fait que les moyens pour élaborer le signal correspondant au courant de pertes comprennent des moyens pour élaborer séparément un signal correspondant au couple de décollage et un signal correspondant aux pertes fonctions de la vitesse.

3 - Dispositif de régulation selon l'une quelconque des revendications 1 et 2, caractérisé par le fait que le circuit écrêteur comprend également des moyens (18) pour élaborer un signal correspondant au courant requis par le moteur pour vaincre les forces d'inertie et atteindre la vitesse de rotation demandée, et pour ajouter ce signal auxdits signaux correspondant au courant de pertes et au courant utile.

4 - Dispositif de régulation selon l'une quelconque des revendications 1 à 3, caractérisé par le fait que les entrées du circuit sommateur sont constitués par les points milieux de potentiomètres connectés entre la masse et respectivement, une tension fixe, une tension représentative de la vitesse de rotation du moteur, une tension représentative de l'accélération du moteur, et une tension représentative du fonctionnement demandé.

5 - Dispositif de régulation selon l'une quelconque des revendications 1 à 4, caractérisé par le fait que les moyens pour élaborer le signal correspondant au courant utile pour obtenir le fonctionnement demandé comprennent des moyens choisis parmi le groupe :

- des moyens (26) pour élaborer un signal correspondant à la différence entre la vitesse de rotation du moteur et une vitesse de référence,

- des moyens (30) pour fournir un signal correspondant à un couple de référence, et

- des moyens (32) pour fournir un signal représentant une fonction donnée du temps.

6 - Dispositif de régulation selon la revendication 5, caractérisé par le fait que les moyens pour élaborer le signal correspondant au courant utile comprennent au moins deux desdits moyens dudit groupe, et des moyens (20) pour effectuer la somme des signaux correspondants,

7 - Dispositif de régulation selon l'une quelconque des revendications 1 à 6, caractérisé par le fait qu'il comprend des moyens de visualisation (33) connectés auxdits moyens pour élaborer le signal correspondant au courant utile.

8 - Dispositif de régulation d'un moteur électrique (1) à courant continu, comprenant :

- une boucle de régulation externe, dite "boucle vitesse", par laquelle la vitesse de rotation (N) du moteur est ramenée à l'entrée du dispositif, notamment sous la forme de la tension aux bornes d'une génératrice tachymétrique (2) accouplée audit moteur, et comparée à un signal de référence, le signal d'erreur ($e_1$) ainsi généré étant amplifié dans un "amplificateur vitesse" (8) pour fournir une "référence intensité", et

- une boucle de régulation interne, dite "boucle intensité", par laquelle l'intensité (I) dans le moteur est ramenée à la sortie de l'amplificateur vitesse, et comparée à la référence intensité, le signal d'erreur ($e_2$) ainsi obtenu étant amplifié dans un "amplificateur intensité" (13) pour fournir le signal d'entrée ($U_{all}$) dans un circuit de commande (4),

caractérisé par le fait qu'il comprend des moyens (11) pour additionner, au signal d'erreur de la boucle intensité, un signal dont la valeur absolue est fonction de la vitesse de rotation du moteur et dont le signe dépend du fait que le moteur fonctionne en moteur proprement dit ou en générateur.

9 - Dispositif de régulation selon la revendication 8, caractérisé par le fait que ladite valeur absolue est proportionnelle à la vitesse.

10 - Dispositif de régulation selon l'une quelconque des revendications 8 et 9, susceptible d'être utilisé pour la régulation d'un moteur alimenté par deux pont redresseurs (3), et comprenant une logique de commande (5) pour sélectionner un des ponts selon que le moteur fonctionne en moteur proprement dit ou en générateur, caractérisé par le fait que le signe dudit signal fonction de la vitesse de rotation est déterminé par ladite logique de commande.

11 - Dispositif de régulation selon la revendication 10, caractérisé par le fait qu'il comprend un commutateur (34) commandé par ladite logique de commande, ledit commutateur étant agencé pour appliquer ladite valeur absolue du signal fonction de la vitesse, soit à l'entrée positive, soit à l'entrée négative de l'amplificateur intensité.

12 - Mesureur d'effort, caractérisé par le fait qu'il comprend un moteur électrique à courant continu et un dispositif de régulation selon l'une quelconque des revendications 1 à 11.

13 - Appareil d'exercice physique, caractérisé par le fait qu'il comprend un moteur électrique à courant continu et un dispositif de régulation selon l'une quelconque des revendications 1 à 11.

Fig:1

0201388

Fig: 2

0201388

*Fig:3*

Ref.I  39

−I  40

E  41

38  36  37

13  $u_{all}$

35

34

12

*Fig:4A*

N

④ G

③ M

① M

② G

$u_{all}$

$I_{cst}$

*Fig:4B*

N

$u_{all}$

$I_{cst}$

**Office européen des brevets**

# RAPPORT DE RECHERCHE EUROPEENNE

Numéro de demande

EP 86 40 0821

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | REVUE GENERALE DE L'ELECTRICITE, vol. 85, no. 12, décembre 1976, pages 1003-1008; J. ROMAN: "Systèmes électriques de traction et automatisation dans les engins de remontées mécaniques: Entraînement des télésièges par moteur à courant continu et variateur de vitesse à thyristors" * Page 1006; figure 7 * | 1,8 | H 02 P 5/16<br>H 02 P 5/165 |
| | --- | | |
| A | DE-A-2 449 440 (G. CARNIELLI) * Revendications; page 9, paragraphe 2 - page 10, paragraphe 3; figure 1 * | 12,13 | |
| | --- | | |
| A | DE-A-2 613 533 (J. DEAK) | | |
| | --- | | |
| A | FR-A-1 512 961 (SANEX, S.L.) | | |
| | --- | | |
| A | FR-A-2 218 689 (ALSTHOM) | | |
| | --- | | |
| A | FR-A-2 286 531 (SIEMENS) | | |
| | --- | | |
| A | DE-A-2 212 773 (H. KNOCH) | | |
| | ----- | | |

**DOMAINES TECHNIQUES RECHERCHES (Int. Cl.4)**

H 02 P
A 63 B
A 61 H

Le présent rapport de recherche a été établi pour toutes les revendications

| Lieu de la recherche | Date d'achèvement de la recherche | Examinateur |
|---|---|---|
| LA HAYE | 01-07-1986 | BEYER F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82